# EUROPEAN PATENT APPLICATION

(11) **EP 0 525 799 A1**
(43) Date of publication of application: **03.02.1993**
(21) Application number: 92113102.5
(22) Date of filing: 31.07.1992
(51) Int. Cl.: G06F 3/023

(54) **Keyboard and cursor control keys**

(30) Priority: 02.08.1991 JP 216168/91
(71) Applicant: NIPPON STEEL CORPORATION, Tokyo 100-12 (JP)
(72) Inventor: Nakai, Toshio, Chiyoda-ku, Tokyo (JP)
(74) Representative: VOSSIUS & PARTNER

(57) **Abstract**

A keyboard (10) for inputting data into a processing apparatus (20) provided with a display unit (27) comprises a plurality of cursor keys (12a, 12b, 12c, 12d) for pointing a cursor position on the display unit, at least one (12c) of the cursor keys being a variable cursor key (13) operable selectively for one of a first function of a normal cursor key and a second function of a pointing-device emulation key, and means (14) for switching the variable cursor key between the first function and the second function.

## Description

The present invention relates to a keyboard and more particularly to a keyboard which is used as an input unit for a processing apparatus provided with a display unit such as a personal computer.

In some of the keyboards used as an input unit for a processing apparatus provided with a display unit such as a personal computer, there are provided with a key for emulating a pointing device, that is, a key for performing the same function as that of the pointing device such as a mouse or a track pole, in addition to a plurality of standard cursor keys for pointing a cursor position. There are two kinds of the emulation keys arranged in a keyboard, one is a key exclusively used for emulation and the other is a key which is used both for emulation and its basic function. As the key used for both emulation and its basic function, there is one of the home-position keys, i.e. "J" and "F" keys, in the Qwerty-order (ASCII-order) character keys, as disclosed in U.S. Patent No. 4,680,577, for example, the "J" key which is normally used as the ASCII character key and can be additionally used for emulating the point device by operation of a predetermined control key. This type of keyboard needs a smaller number of keys. Hence, the use of this keyboard is effective to conveniently reduce the overall device in size.

This type of keyboard involves a problem, however, since it uses one of the home-position character keys for emulating a pointing device. That is, when the pointings on a display are carried out by using alternately the normal cursor key and the character key for its pointing device emulation function, the operation is very complicated due to relatively spaced positions of the normal key and the character key having the pointing device emulation function.

In order to solve the above problem, the object of the present invention is to provide a keyboard which is arranged to use a specific key selectively as any of a normal key for its basic function and a key for emulating the pointing device and facilitates the switching operation in pointings on a display by using alternately the normal cursor key and the specific key for the pointing device emulation function.

In order to achieve the above object, according to the present invention, a keyboard for inputting data into a processing apparatus provided with a display unit comprises: a plurality of cursor keys used for pointing a cursor position on the display unit, at least one of the cursor keys being a variable key capable of performing selectively two of a first function for a normal cursor key and a second function for a pointing device emulation key and switching means for switching the variable key between the first and second functions.

According to the invention, the keyboard is arranged to use at least one of the cursor keys by switching its function between a pointing-device emulation function and a normal cursor key function. This makes it possible to easily carry out the switching operation to switch the operation between an operation of pointing on the display unit by using any one of the cursor keys for its normal key function and that by using the at least one of the cursor keys for the pointing-device emulation function.

The pointing by using the normal cursor keys is carried out by pressing one of the normal cursor keys to move the cursor at a low speed in a direction, right or left in horizontal direction or upward or downward in vertical direction, specified by the cursor key as pressed. On the other hand, when using the specific cursor key switched to the pointing-device emulation function, the pointing index such as a cursor or a pointer is moved in any direction depending on the direction in which the specific cursor key is inclined thereby moving the pointing index directly to a desired position at a high speed substantially in the same manner as that in pointing by the usual pointing device such as a mouse.

### BRIEF DESCRIPTION OF THE DRAWINGS

Fig. 1 is a plan view showing a key arrangement on a keyboard according to one embodiment of the present invention;
Fig. 2 is a block diagram showing a basic construction of a personal computer having the keyboard shown in Fig.1; and
Fig. 3 is a flowchart illustrating an operation of a keyboard according to another embodiment of the present invention.

### DESCRIPTION OF THE PREFERRED EMBODIMENTS

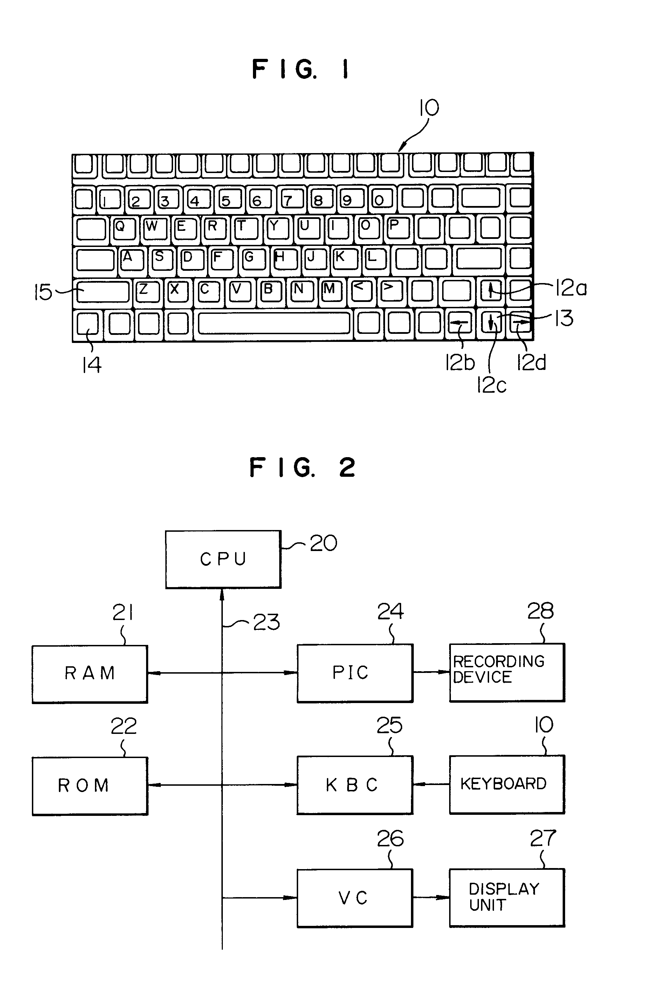

An embodiment of the invention will be described by referring to Fig.1. A keyboard 10 shown in Fig.1 is used for a notebook type personal computer. The keyboard 10 provides cursor keys 12a, 12b, 12c, 12d for moving a cursor upward, leftward, downward and rightward, respectively and one control key 14 for controlling the function of the key 12c. The plurality of cursor keys are located at the lower right portion of the keyboard shown in Fig. 1. It is convenient to use the key located at the leftmost and lowermost key position of the keyboard as a control key. The cursor key 12c is arranged as a variable cursor key 13 whose function is changeable between the normal cursor key function and the pointing-device emulation function. The variable cursor key 13 may be the same key as described in U.S. Patent No. 4,680,577. Since it is well known in the U.S. Patent to use a specific key whose function is changed by a control key, the detailed description of its arrangement is omitted. Herein, the contents of U.S. Patent specification No. 4,680,577 are incorporated by reference.

Fig. 2 is a block diagram showing a personal computer using the keyboard 10 according to the embodiment of the invention. 20 denotes a CPU which is connected through a bus 23 to a RAM 21, a ROM 22, a peripheral-device interface controller PIC 24, a keyboard controller 25, and a video controller VC 26. The peripheral-device interface controller 24 is connected to a recording unit 28 such as a printer, a harddisk drive and a floppy disk drive. The keyboard controller KBC 25 is connected to the keyboard 10. The video controller VC 26 is connected to a display unit 27 such as an LCD (liquid crystal display) or a CRT (Cathode-Ray Tube).

In the arrangement, the coarse movement of a position index such as a cursor or a pointer on the display unit 27 is made by inclining the variable cursor key 13 in a direction to which the position index is to be moved, while pressing the control key 14. A signal indicating an inclined state of the variable cursor key including an angle and a direction in inclining of the variable cursor key 13 is transmitted to the CPU 20. The CPU 20 operates to move the position index in response to the signal. For the fine movement of the position index, the upward, downward, rightward or leftward cursor key as selected in accordance with the moving direction is operated. When the variable key 13 is used as a normal cursor key 12c, the control key is not operated. The control of the direction and speed in movement of the cursor according to an angle and a direction in inclining of the key is disclosed in JP-A-3-209514.

In the foregoing embodiment, one of the cursor keys can be used as a variable cursor key whose function is changeable from a normal cursor key function to a pointing-device emulation function by operating the control key. Hence, the fine movement of the position index on the display unit is performed by the normal cursor key, and the coarse movement of the position index is performed by the variable cursor key having the function as changed by the control key. Since one of the normal cursor keys is used as the variable cursor key, the switching between the fine movement of the cursor and the coarse movement thereof is simple so that it is possible to rapidly move the position index to a desired position on the display unit.

In the foregoing embodiment, one of the cursor keys is used as the variable cursor key. Two or more cursor keys may be used as the variable cursor keys.

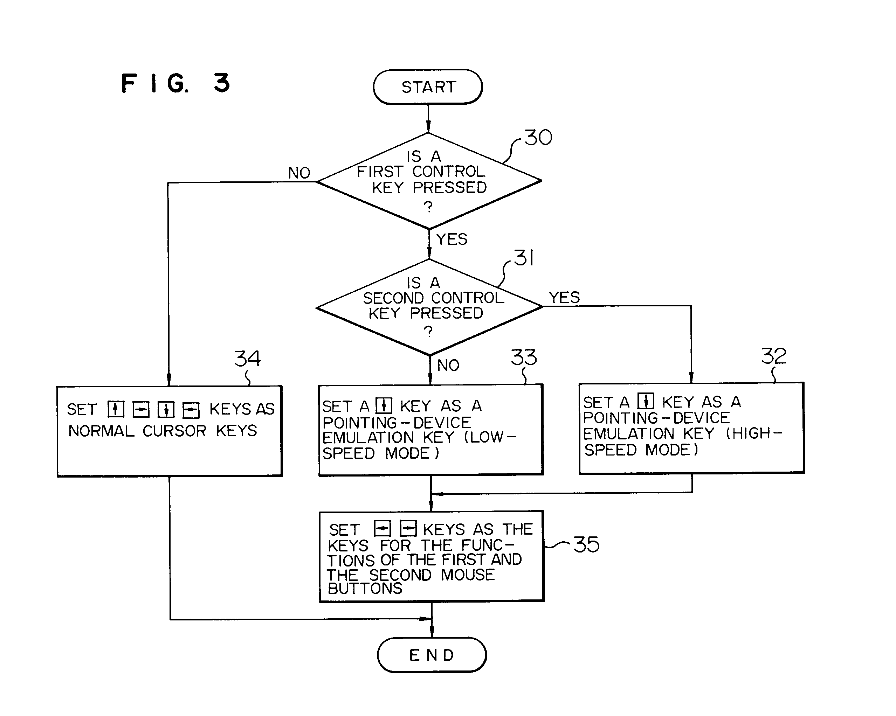

The operation of another embodiment of the invention will be described by referring to Fig. 3. In this embodiment, it is possible to switch the speed in movement of the position index by using the variable cursor key for the pointing-device emulation function between two stages of high and low speeds and also it is possible to provide pointing functions similar to the functions of the first and second buttons of the mouse as well known.

In order to switch the moving speed of the cursor between the high-speed stage and the low-speed stage, a key (usually a shift key) 15 immediately above the first control key 14 on the keyboard shown in Fig. 1 is used as a second control key. The switching of the functions of the variable cursor key by the first and the second control keys is executed under the control of the software of the CPU. The operation will be described by referring to Fig. 3. First, it is determined whether or not the first control key is pressed (step 30). If the first control key is pressed, it is determined whether or not the second control key is pressed (step 31). If the first and the second control keys are both pressed, the variable cursor key 13 (cursor key 12c used for downward movement) is used as a pointing-device emulation key for moving the cursor at a high speed (step 32). If the first control key is pressed but the second control key is not pressed, the variable cursor key 13 is used as a pointing-device emulation key for moving a cursor at a low speed (step 33). When the first control key is not pressed at the step 30, each cursor key is used as a normal cursor key (step 34). When the first and the second control keys are both pressed, the cursor keys other than the cursor key used as the variable cursor key, that is, the cursor keys 12b and 12d for rightward and leftward movements, respectively, are used as the keys for the functions of the first and the second mouse buttons.

The construction for using the variable cursor key 13 (12c) as the pointing-device emulation key changeable between high speed mode and low speed mode in movement of the cursor and the construction for using the cursor keys 12b and 12c for the functions of the first and second mouse buttons are both well known in the art. Hence, the detailed description of these constructions is omitted.

Further, the upward-movement cursor key 12a may be used as a key for the functions of the third mouse button.

In the foregoing embodiment, when the variable cursor key 13 (12c) is used as a pointing-device emulation key, the shift key located immediately above the first control key is used for switching the function between the high-speed mode and the low-speed mode. The upward-movement and the downward-movement cursor keys 12a and 12c may be used as the variable cursor keys, each changeable to the pointing-device emulation function, such that the upward-movement cursor key 12a is used as a key for high-speed mode and the downward-movement cursor key 12c is used as a key for low-speed mode.

## Claims

1. A keyboard for inputting data to a processing apparatus (20) provided with a display unit

(27) comprising:
a plurality of cursor keys (12a, 12b, 12c, 12d) for pointing a cursor position on said display unit;
at least one of said cursor keys being a variable cursor key (13) operable selectively for one of a first function of a normal cursor key and a second function of a pointing-device emulation key for pointing a desired position on said display unit; and
means (14) for switching said variable cursor key between said first function and said second function.

2. A keyboard as claimed in Claim 1, wherein said plurality of cursor keys are located at a right lower side of said keyboard, said switching means includes a control key (14) located at a leftmost and lowermost key position, and said variable cursor key (13) is used for said second function, when said control key is pressed.

3. A keyboard as claimed in Claim 2, further comprising a second control key (15) for switching a speed in movement of a position index for pointing the desired position on the display between a high speed mode and a low speed mode when the variable cursor key is used for the second function.

4. A keyboard as claimed in Claim 3, wherein said second control key (15) is a key immediately above said first control key (14).

5. A keyboard as claimed in any one of Claims 1 to 4, further comprising means (12b, 12d) for providing said variable cursor key with a pointing function in addition to the second function when said variable cursor key is used for the second function.

6. A keyboard as claimed in any one of Claims 1 to 5, wherein two keys (12a, 12c) of said plurality of cursor keys are used as variable cursor keys, each being used selectively for one of said two functions, and one (12a) of said two keys is used as a high speed mode key and the other (12c) of the two keys is used as a low speed mode key.
